# EUROPEAN PATENT APPLICATION

(11) **EP 2 003 173 A1**
(43) Date of publication of application: **17.12.2008**
(21) Application number: 07739723.0
(22) Date of filing: 27.03.2007
(51) Int. Cl.: C09D 4/02, B32B 27/30, C08F 299/06, C09D 175/16

(54) **PHOTOCURABLE COATING MATERIAL**

(30) Priority: 31.03.2006 JP 2006097526
(71) Applicant: Mitsui Chemicals, Inc., Tokyo 105-7117 (JP)
(72) Inventor: ISHIDA, Tadashi, Sodegaura-shi, Chiba 299-0265 (JP); MATSUMOTO, Tsuyoshi, Sodegaura-shi, Chiba 299-0265 (JP)
(74) Representative: HOFFMANN EITLE
(86) International application number: PCT/JP2007/056285
(87) International publication number: WO 2007/116704

(57) **Abstract**

Photocurable coating materials of the invention are cured with UV lights, electron beams, radiations and the like and are excellent in heat discoloration resistance, adhesion to substrates, abrasion resistance, water resistance and impact resistance. A photocurable coating material includes 5 to 95 parts by weight of a urethane acrylate (U), 5 to 95 parts by weight of an acrylate compound (M) and, based on 100 parts by weight of the total of (U) and (M), 0.1 to 15 parts by weight of a photoinitiator (C), the urethane acrylate (U) at least containing one or more diisocyanates (a) selected from the group consisting of hydrogenated xylylene diisocyanate and hydrogenated methylenebisphenylene diisocyanate and a compound (b) having a hydroxyl group and a (meth)acrylate group, the acrylate compound (M) having two or more acrylate groups in the molecule, an acrylate group content of 5 to 12 mmol/g and no aromatic ring structure.

## Description

### FIELD OF THE INVENTION

The present invention relates to photocurable coating materials that are cured with UV lights, electron beams, radiations and the like.

### BACKGROUND OF THE INVENTION

UV-curable coating materials contain oligomers or monomers that are responsible for the photocuring. The coating materials contain no volatile components and thus receive attention as environmentally friendly coating materials. Photocurable urethane acrylates are known oligomers capable of giving coating films with high abrasion resistance. In general, urethane acrylates possess excellent abrasion resistance and have thicker coating appearance and high degree of reflective characteristics, whereby quality appearances are obtained. However, they change color with heat or environmental changes.

To solve this problem, Patent Document 1 discloses active energy ray-curable resin compositions containing a urethane acrylate and a monofunctional (meth) acrylate. According to the disclosure, the monofunctional acrylate is an essential component for ensuring good adhesion to steel or copper plates and high folding processability at high temperatures. Because of this component, however, the crosslinking density after UV curing is low and abrasion resistance is insufficient. This patent document addresses durability at high temperatures by improving folding processability after heating. However, heat discoloration resistance is insufficient and therefore the compositions cannot be used with transparent plastic substrates or the like. The heat resistance of plastics as substrates has been rapidly improved in these days, and UV-curable coating materials of the above compositions are not applicable to such substrates. Patent Document 2 discloses urethane acrylates that contain a polyol with a condensed polycyclic ring, a polyisocyanate, and a compound containing a hydroxyl group and a (meth) acrylate group. According to the disclosure, the polyol having a condensed polycyclic ring provides reduced cure shrinkage, high adhesion and improved crack resistance of the coating films in a heat resistance test. However, the use of the polyol having a condensed polycyclic ring results in insufficient heat discoloration resistance.
Patent Document 1: JP-A-H07-48422
Patent Document 2: JP-2002-212500

### DISCLOSURE OF THE INVENTION

It is an object of the invention to provide photocurable coating materials that are cured with UV lights, electron beams, radiations and the like and are excellent in heat discoloration resistance, adhesion to substrates, abrasion resistance, water resistance and impact resistance.

### SUMMARY OF THE INVENTION

The present inventors diligently studied to solve the aforementioned problems and have arrived at photocurable coating materials having excellent heat discoloration resistance, adhesion to substrates, abrasion resistance, water resistance and impact resistance. A photocurable coating material according to the present invention comprises 5 to 95 parts by weight of a urethane acrylate (U), 5 to 95 parts by weight of an acrylate compound (M) and, based on 100 parts by weight of the total of (U) and (M), 0.1 to 15 parts by weight of a photoinitiator (C), the urethane acrylate (U) at least comprising one or more diisocyanates (a) selected from the group consisting of hydrogenated xylylene diisocyanate and hydrogenated methylenebisphenylene diisocyanate and a compound (b) containing a hydroxyl group and a (meth) acrylate group, the acrylate compound (M) having two or more acrylate groups in the molecule, an acrylate group content of 5 to 12 mmol/g and no aromatic ring structure. The present invention has been thus completed.
A plastic shaped article according to the present invention is coated with the photocurable coating material.

### ADVANTAGES OF THE INVENTION

The photocurable coating materials of the invention have superior heat discoloration resistance, adhesion to substrates, abrasion resistance, water resistance and impact resistance.

### BEST MODE FOR CARRYING OUT THE INVENTION

The present invention will be described in detail hereinbelow.

### Urethane acrylates (U)

The urethane acrylate in the invention at least contains one or more diisocyanates (a) selected from the group consisting of hydrogenated xylylene diisocyanate and hydrogenated methylenebisphenylene diisocyanate and a compound (b) containing a hydroxyl group and a (meth)acrylate group.

From the viewpoint of abrasion resistance, the ratio of (a) and (b) is such that based on 100 parts by weight of (a), the amount of (b) is generally 1 to 300 parts by weight, preferably 5 to 200 parts by weight, more preferably 10 to 100 parts by weight, and still more preferably 20 to 80 parts by weight.

The hydrogenated xylylene diisocyanate and hydrogenated methylenebisphenylene diisocyanate are classified into non-yellowing diisocyanates without aromatic rings. Other non-yellowing diisocyanates include isophorone diisocyanate (IPDI), norbornene diisocyanate (NBDI) and tetramethylxylylene diisocyanate (TMXDI), but these are poor in heat discoloration resistance. Therefore, the hydrogenated xylylene diisocyanate and hydrogenated methylenebisphenylene diisocyanate should be used to obtain excellent heat discoloration resistance.

Other diisocyanates may be used together with the hydrogenated xylylene diisocyanate and hydrogenated methylenebisphenylene diisocyanate. Such diisocyanates include hexamethylene diisocyanate (HDI), isophorone diisocyanate (IPDI), norbornene diisocyanate (NBDI), tetramethylxylylene diisocyanate (TMXDI), tolylene diisocyanate (TDI), xylylene diisocyanate (XDI) and methylenebisphenylene diisocyanate (MDI).

Based on 100 parts by weight of the total of diisocyanates used, the amount of the hydrogenated xylylene diisocyanate and/or the hydrogenated methylenebisphenylene diisocyanate is at least 50 parts by weight, preferably at least 70 parts by weight, and more preferably at least 85 parts by weight, whereby excellent heat discoloration resistance and abrasion resistance are obtained.

Examples of the compounds (b) containing a hydroxyl group and a (meth) acrylate group include compounds having one acrylate group and/or one methacrylate group in the molecule such as 2-hydroxyethyl acrylate, 2-hydroxyethyl methacrylate, 2-hydroxypropyl acrylate, 2-hydroxypropyl methacrylate, 4-hydroxybutyl acrylate, 4-hydroxybutyl methacrylate, 2-hydroxy-3-phenoxypropyl acrylate, 2-hydroxy-3-phenoxypropyl methacrylate, polyethylene glycol monoacrylate, polyethylene glycol monomethacrylate, polypropylene glycol monoacrylate and polypropylene glycol monomethacrylate; and compounds having two or more in total of acrylate groups and/or methacrylate groups in the molecule such as pentaerythritol acrylate, pentaerythritol methacrylate, isocyanuric acid ethyleneoxide-modified diacrylate, isocyanuric acid ethyleneoxide-modified dimethacrylate, glycerin dimethacrylate and 2-hydroxy-3-acryloyloxypropyl methacrylate.
In particular, 2-hydroxyethyl acrylate, 2-hydroxypropyl acrylate and 4-hydroxybutyl acrylate are more preferable in order to achieve excellent heat discoloration resistance.

The urethane acrylate in the invention contains at least the diisocyanate (a) and the compound (b) with a hydroxyl group and a (meth) acrylate group, and may further contain a monohydric alcohol or a polyol. Examples of the alcohols include monohydric alcohols, dihydric alcohols, trihydric alcohols, tetrahydric alcohols and polyhydric alcohols having more than four hydroxyl groups. The alcohols may be used singly or in combination. The polyols preferably have a hydroxyl group content of 0.5 to 25.0 mmol/g. Of the monohydric alcohols, methanol, ethanol, n-butanol, i-butanol, 2-ethylhexanol and isopropyl alcohol are preferred. When the urethane acrylate (U) contains any one or more of the monohydric alcohols and polyols, the amount of such one or more alcohols combined is 0 to 90 wt%, preferably 0 to 80 wt%, and more preferably 0 to 70 wt% relative to 100 wt% of the urethane acrylate (U).

In addition, there may be used hydroxyl group-containing polymers such as polyester polyols, polyethylene glycols, polypropylene glycols, polycaprolactone polyols, polytetramethylene polyols and polycarbonate polyols. In particular, polytetramethylene polyols and polycarbonate polyols are preferable in order to obtain excellent abrasion resistance, adhesion to substrates, heat discoloration resistance, water resistance and impact resistance. Polycarbonate polyols are preferable in order to achieve higher water resistance, in addition to the above properties. The hydroxyl group-containing polymers preferably range in molecular weight from 200 to 2000, in which case the viscosity is appropriate for coating.

The urethane acrylate in the invention may be prepared as follows. At least one or more diisocyanates (a) selected from hydrogenated xylylene diisocyanate and hydrogenated methylenebisphenylene diisocyanate are reacted each other, or the diisocyanate(s) are reacted with the polyol, and the diisocyanate(s) containing isocyanate groups react with the compound (b) containing a hydroxyl group and a (meth)acrylate groupis allowed to react with the residual isocyanate groups.

The reaction of the isocyanate groups may be controlled by the reaction temperature. For example, the isocyanate groups react with each other at temperatures of 80 to 120°C, forming an isocyanurate that is a diisocyanate trimer or an allophanate group that is a diisocyanate dimer. At reaction temperatures of 60 to 80°C, the isocyanate groups and the hydroxyl groups undergo addition reaction, forming urethane linkages. In the reaction forming the urethane linkages, the isocyanate group/hydroxyl group molar ratio is generally 0.9 to 1.1, and the molar ratio in the reaction forming the isocyanurate groups or the allophanate groups is generally 5 to 20.

The reaction may or may not involve a solvent. The solvent, if used, should be inert to the isocyanate groups.

A catalyst for use in the reaction is such that the reaction is easily controlled, the final product is less colored, and little dimers poor in heat stability are produced. Examples of such catalysts include hydroxides and organic weak acid salts thereof of tetraalkylammoniums such as tetramethylammonium, tetraethylammonium, tetrabutylammonium and trimethylbenzylammonium; hydroxides and organic weak acid salts thereof of trialkylhydroxyalkylammoniums such as trimethylhydroxypropylammonium, trimethylhydroxyethylammonium, triethylhydroxypropylammonium and triethylhydroxyethylammonium; alkali metal salts of alkylcarboxylic acids such as acetic acid, caproic acid, octylic acid and myristic acid; salts of the above alkylcarboxylic acids with metals such as tin, zinc and lead; metal chelate compounds of β-diketones such as aluminum acetylacetone and lithium acetylacetone; Friedel-Crafts catalysts such as aluminum chloride and boron trifluoride; organic metal compounds such as titanium tetrabutylate and oxides of tributylantimony; and aminosilyl group-containing compounds such as hexamethylsilazane. Of these catalysts, the quaternary ammonium compounds such as the hydroxides of tetraalkylammoniums and organic weak acid salts thereof and the hydroxides of trialkylhydroxyalkylammoniums and organic weak acid salts thereof are preferred. The amount of the catalysts to be used may vary depending on the type of catalyst and the reaction temperature, but is usually 0.0001 to 1% relative to the total of all the raw materials.

When the reaction reaches a desired conversion, the catalyst is deactivated by adding an acidic substance such as phosphoric acid, benzoyl chloride, monochloroacetic acid or dodecylbenzenesulfonic acid as a catalyst deactivator to the reaction mixture. If unreacted diisocyanate remains, it is removed by such means as membrane distillation.

To provide excellent abrasion resistance, the urethane acrylate (U) preferably has a weight-average molecular weight of 500 to 100000, more preferably 500 to 50000, still more preferably 500 to 20000, and most preferably 500 to 10000, as measured by gel permeation chromatography (GPC) relative to polystyrene standards.

### Acrylate compound (M)

The acrylate compound (M) has two or more acrylate groups in the molecule, an acrylate group content of 5 to 12 mmol/g and no aromatic ring structure, whereby excellent abrasion resistance and heat discoloration resistance are obtained. If the number of the acrylate groups in the molecule is less than 2 or the acrylate group content is less than 5 mmol/g, sufficient abrasion resistance is not obtained. Any acrylate group content exceeding 12 mmol/g is difficult to be synthesized. The presence of an aromatic ring structure drastically decreases heat discoloration resistance.
To provide higher resistance to heat discoloration, the acrylate compound (M) is preferably free of nitrogen.

Examples of the acrylate compounds (M) include dipentaerythritol hexaacrylate, dipentaerythritol pentaacrylate, pentaerythritol triacrylate, pentaerythritol tetraacrylate, trimethylolpropane triacrylate, ditrimethylolpropane tetraacrylate, tripropylene glycol diacrylate, 1,6-hexanediol diacrylate, tricyclodecanedimethanol diacrylate (R684), [2-[1,1-dimethyl-2-[(1-oxoallyl)oxy]ethyl]-5-ethyl-1,3-diox ane-5-yl] methacrylate (R604), (2-hydroxyethyl) (meth)acrylate acid phosphate and triacryloyloxyethyl phosphate.
In particular, tricyclodecanedimethanol diacrylate (R684) and [2-[1,1-dimethyl-2-[(1-oxoallyl)oxy]ethyl]-5-ethyl-1,3-dioxane-5-yl] methacrylate (R604) are preferable in order to obtain excellent water resistance. For excellent adhesion to metal substrates, the phosphorus-containing acrylate compounds such as (2-hydroxyethyl) (meth)acrylate acid phosphate and triacryloyloxyethyl phosphate are preferable.
To provide higher abrasion resistance, the acrylate compound (M) preferably has three or more acrylate groups in the molecule and an acrylate group content of 6 to 12 mmol/g, and more preferably has three or more acrylate groups in the molecule and an acrylate group content of 8 to 12 mmol/g. Examples of such acrylate compounds include dipentaerythritol hexaacrylate, dipentaerythritol pentaacrylate, pentaerythritol triacrylate, pentaerythritol tetraacrylate, trimethylolpropane triacrylate and ditrimethylolpropane tetraacrylate.

The weight ratio between the urethane acrylate (U) and the acrylate compound (M) is 5-95 parts by weight and 5-95 parts by weight. For higher abrasion resistance, the ratio therebetween is preferably 5-70 parts by weight and 30-95 parts by weight, and more preferably 5-60 parts by weight and 40-95 parts by weight. The urethane acrylate (U) containing the specific diisocyanate(s) in the invention characteristically does not substantially reduce adhesion even if the amount of the acrylate compound (M) is increased.

The photopolymerization initiator (C) used in the invention is a compound generating radicals upon irradiation with UV lights, electron beams, radiations and the like. Examples include carbonyl compounds such as benzoin, benzoin methyl ether, benzoin ethyl ether, benzoin isopropyl ether, benzoin isobutyl ether, acetoin, butyroin, toluoin, benzyl, benzophenone, p-methoxybenzophenone, diethoxyacetophenone, 2,2-dimethoxy-2-phenylacetophenone, methylphenyl glyoxylate, ethylphenyl glyoxylate, 4,4-bis(dimethylaminobenzophenone), 2-hydroxy-2-methyl-1-phenylpropane-1-one, 1-hydroxycyclohexyl phenyl ketone and 1-(4-isopropylphenyl)-2-hydroxy-2-methylpropane-1-one; sulfur compounds such as tetramethylthiuram disulfide; azo compounds such as azobisisobutyronitrile and azobis-2,4-dimethylvaleronitrile; anthraquinones such as 2-ethylanthraquinone; peroxide compounds such as benzoyl peroxide and di-tertiary butyl peroxide; and acylphosphine oxide compounds such as 2,4,6-trimethylbenzoyldiphenylphosphine oxide and bis(2,6-dimethoxybenzoyl)-2,4,4-trimethylpentylphosphine oxide.
Preferred initiators are benzophenone, methylphenyl glyoxylate, 2-hydroxy-2-methyl-1-phenylpropane-1-one, 1-hydroxycyclohexyl phenyl ketone and 2,4,6-trimethylbenzoyldiphenylphosphine oxide. They may be used singly, or two or more kinds may be used in combination.

The amount of the photopolymerization initiator is 0.01 to 15 parts by weight based on 100 parts by weight of the urethane acrylate (U) and the acrylate compound (M) combined. For the photocurable coating material to show higher resistance to heat discoloration, the amount of the initiator is preferably 0.1 to 10 parts by weight, and more preferably 0.1 to 5 parts by weight.

The photocurable coating materials of the invention may contain various additives such as organic solvents, polymerization inhibitors, ultraviolet absorbents, light stabilizers, antioxidants, yellowing inhibitors, dyes, pigments, leveling agents, anti-foaming agents, tackifiers, antisettling agents, antistatic agents, anti-fogging agents, anti-cissing agents, wetting agents, dispersants, anti-sagging agents, coupling agents and adhesion improvers. Acrylic resins, urethane resins or polyester resins may be added to increase adhesion. The viscosity may be adjusted or the adhesion may be increased by the addition of isobornyl (meth)acrylate, polypropylene glycol di(meth)acrylate, polyethylene glycol di(meth)acrylate, acryloyl morpholine, dicyclopentanyl (meth)acrylate, dicyclopentenyl (meth)acrylate, (2-hydroxyethyl) (meth)acrylate acid phosphate, triacryloyloxyethyl phosphate, and polyester poly(meth)acrylates from the reaction of polybasic acids such as phthalic acid and adipic acid, polyhydric alcohols such as ethylene glycol and butanediol, and (meth)acrylic acid compounds; epoxy poly (meth) acrylates from the reaction of epoxy resins and (meth)acrylic acid compounds; polysiloxane poly(meth)acrylates from the reaction of polysiloxanes and (meth)acrylic acid compounds; and polyamide poly(meth)acrylates from the reaction of polyamides and (meth)acrylic acid compounds.

The photocurable coating material may be applied to a substrate by any methods without limitation. Conventional methods may be used in the invention, with examples including brush coating, spray coating, dip coating, spin coating and curtain coating. The coating amount is preferably such that a cured coating film has a thickness of 3 to 30 µm, in which case sufficient abrasion resistance is obtained and the coating film is free of cracks and shows good adhesion to the substrate.
The coating material applied on the substrate may be cured by conventional methods, for example by applying active energy rays such as UV lights, electron beams and radiations. General UV light sources are UV lamps from practical and economical aspects. Specific examples include ultraviolet lights from low pressure mercury lamps, high pressure mercury lamps, ultrahigh pressure mercury lamps, xenon lamps, gallium lamps, metal halide lamps and natural sunlight. The light application may be performed in air or in an atmosphere of an inert gas such as nitrogen or argon.

A surface of a plastic shaped article may be coated with the photocurable coating material of the invention. Before the coating material is cured with UV radiation energy, heat treatment may be performed at 20 to 120°C for 1 to 60 minutes in an infrared drying furnace or a hot air drying furnace to increase the adhesion of the cured coating film to the substrate.
Examples of the plastics as substrates include polymethyl methacrylate (PMMA) resins, polystyrene (PST) resins, acrylonitrile-butadiene-styrene copolymer (ABS) resins, polycarbonate (PC) resins, polyethylene terephthalate (PET) resins, polybutylene terephthalate (PBT) resins, fiber-reinforced plastics (FRP), polyester resins and polyamide resins.
The plastic shaped articles include sheets, films and various injection molded articles made of the above resins.
The coating materials of the invention may be applied to metal substrates and metal deposited substrates, and may be suitably applied to shaped articles of these substrates.

The coating films from the photocurable coating materials of the invention show high adhesion to various plastic shaped articles and have excellent heat discoloration resistance, abrasion resistance, water resistance and impact resistance. Accordingly, the photocurable coating materials may be suitably used for automobile parts, electric device parts, containers and building materials.

### EXAMPLES

The present invention will be described below by examples without limiting the scope of the invention.

### [Example 1]

A four-necked flask equipped with a stirrer, a thermometer, a nitrogen gas inlet tube and a Dimroth condenser was charged with 468 g of hydrogenated xylylene diisocyanate and 32 g of 2-ethyl hexanol in a nitrogen gas atmosphere. The temperature was increased to 80°C and was maintained constant for 2 hours. Trimethyl-N-2-hydroxypropyl ammonium and 2-ethyl hexanoate as catalysts were added in an amount of 0.08 g. The reaction was performed at reaction temperatures controlled to 85±5°C for 2 hours, and the catalysts were deactivated by adding 0.05 g of benzoyl chloride to terminate the reaction. The resultant reaction liquid was treated with a membrane distillation apparatus (degree of vacuum: 0.5 mmHg, temperature: 150°C) to remove unreacted hydrogenated xylylene diisocyanate. The distillate was cooled and was diluted with ethyl acetate to a nonvolatile content of 80 wt%. Subsequently, 2-hydroxyethyl acrylate was added in an amount such that the amounts of the residual isocyanate groups and the acrylate groups were equivalent. Further, monomethyl ether hydroquinone was added at 0.1 wt% relative to the total amount. Reaction was then carried out at 70°C until all the isocyanate groups reacted. The reaction liquid was cooled and was diluted with ethyl acetate to a nonvolatile content of 80 wt%. A urethane acrylate according to the invention was thus obtained. Subsequently, 37.5 g of the urethane acrylate (urethane acrylate content: 30 g), 70 g of dipentaerythritol hexaacrylate and 3 parts by weight of IRGACURE 184 (a photopolymerization initiator manufactured by Ciba Specialty Chemicals Inc.) were mixed to give a photocurable coating material according to the present invention.

### [Example 2]

A four-necked flask equipped with a stirrer, a thermometer, a nitrogen gas inlet tube and a Dimroth condenser was charged with 200 g of hydrogenated methylenebisphenylene diisocyanate and 2 g of monomethyl ether hydroquinone, and 176.8 g of 2-hydroxyethyl acrylate was added dropwise in a nitrogen gas atmosphere while controlling the reaction temperature to not more than 70°C. After the completion of the dropwise addition, 0.1 g of dibutyl tin laurylate was added, and the reaction temperature was maintained at 70°C until all the isocyanate groups reacted. The reaction liquid was cooled and was diluted with ethyl acetate to a nonvolatile content of 80 wt%. A urethane acrylate according to the invention was thus obtained. Subsequently, 37. 5 g of the urethane acrylate (urethane acrylate content: 30 g), 70 g of dipentaerythritol hexaacrylate and 3 parts by weight of IRGACURE 184 (a photopolymerization initiator manufactured by Ciba Specialty Chemicals Inc.) were mixed to give a photocurable coating material according to the present invention.

### [Examples 3 to 8]

Coating materials indicated in Table 1 were prepared using the urethane acrylate (U) produced in Example 1 or 2.

### [Example 9]

A four-necked flask equipped with a stirrer, a thermometer, a nitrogen gas inlet tube and a Dimroth condenser was charged with 200 g of hydrogenated xylylene diisocyanate and 516 g of a polycarbonate polyol with a molecular weight of 1000 (ETERNACOLL UH-100 manufactured by UBE INDUSTRIES, INC.) in a nitrogen gas atmosphere. Reaction was performed until the isocyanate group content became 6.1 wt% while controlling the reaction temperature to not more than 70°C. Subsequently, 120 g of 2-hydroxyethyl acrylate, 1 g of monomethyl ether hydroquinone and 0.2 g of dibutyl tin laurylate were added, and the reaction temperature was maintained at 70°C until all the isocyanate groups reacted. The reaction liquid was cooled and was diluted with ethyl acetate to a nonvolatile content of 80 wt%. A urethane acrylate (U) according to the invention was thus obtained. Subsequently, 37.5 g of the urethane acrylate (urethane acrylate content: 30 g), 70 g of tricyclodecane dimethanol diacrylate and 3 parts by weight of IRGACURE 184 (a photopolymerization initiator manufactured by Ciba Specialty Chemicals Inc.) were mixed to give a photocurable coating material according to the present invention.

### [Example 10]

A photocurable coating material according to the present invention was obtained in the same manner as in Example 9, except that the polycarbonate polyol used in Example 9 was replaced by a polytetramethylene polyol with a molecular weight of 1000 (PTG 1000 manufactured by HODOGAYA CHEMICAL CO., LTD.).

### [Examples 11 and 12]

Coating materials shown in Table 1 were prepared using the urethane acrylate (U) from Example 9.

### [Comparative Example 1]

A photocurable coating material was prepared by a method disclosed in Example 3 of JP-A-2002-212500.

### [Comparative Example 2]

A photocurable coating material disclosed in Example 7 of JP-A-H07-48422 was prepared as follows. A four-necked flask equipped with a stirrer, a thermometer, a nitrogen gas inlet tube and a Dimroth condenser was charged with 410 g of a polycaprolactone diol (product name: 210N, molecular weight: 1000, manufactured by DAICEL CHEMICAL INDUSTRIES, LTD.) and 200 g of tetramethylxylylene diisocyanate in a nitrogen gas atmosphere. Reaction was performed until the isocyanate group content became 5.6% while controlling the reaction temperature to not more than 70°C. Subsequently, 95 g of 2-hydroxyethyl acrylate, 1 g of monomethyl ether hydroquinone and 0.1 g of dibutyl tin laurylate were added, and the reaction temperature was maintained at 70°C until all the isocyanate groups reacted. The reaction liquid was diluted with ethyl acetate to a nonvolatile content of 80%. A urethane acrylate according to the invention was thus obtained. Subsequently, 75 g of the urethane acrylate (urethane acrylate content: 60 g), 40 g of dicyclopentanyl methacrylate and 3 parts of IRGACURE 184 (a photopolymerization initiator manufactured by Ciba Specialty Chemicals Inc.) were mixed to give a photocurable coating material in Comparative Example 2.

### [Comparative Examples 3 to 6]

Coating materials shown in Table 1 were prepared using the urethane acrylate (U) from Example or Comparative Example 1 or 2.

### [Comparative Example 7]

A four-necked flask equipped with a stirrer, a thermometer, a nitrogen gas inlet tube and a Dimroth condenser was charged with 200 g of isophorone diisocyanate and 450 g of a polycaprolactone diol with a molecular weight of 1000 in a nitrogen gas atmosphere. Reaction was performed until the isocyanate group content became 5.8 wt% while controlling the reaction temperature to not more than 70°C. Subsequently, 105 g of 2-hydroxyethyl acrylate, 1 g of monomethyl ether hydroquinone and 0.2 g of dibutyl tin laurylate were added, and the reaction temperature was maintained at 70°C until all the isocyanate groups reacted. The reaction liquid was cooled and was diluted with ethyl acetate to a nonvolatile content of 80 wt%. A urethane acrylate (U) according to the invention was thus obtained. Subsequently, 37.5 g of the urethane acrylate (urethane acrylate content: 30 g), 70 g of tris-acryloyloxyethyl isocyanurate and 3 parts by weight of IRGACURE 184 (a photopolymerization initiator manufactured by Ciba Specialty Chemicals Inc.) were mixed to give a photocurable coating material in Comparative Example 7.

### [Evaluation methods]

The photocurable coating materials prepared above were tested by the following methods. The results are shown in Table 1.

### (UV curing conditions)

The photocurable coating material was applied to a predetermined substrate using an applicator such that the dry thickness would be 10 µm. The coating was dried at 60°C for 1 minute. The material was UV irradiated by means of a UV irradiator having three 100 w/cm high pressure mercury lamps. The irradiation distance was 10 cm, and the line rate was 10 m/min. The test pieces thus obtained were subjected to the following tests.

### (Heat discoloration resistance)

The substrate was PC (polycarbonate). The test pieces were heated at 120°C for 7 hours. The degree of discoloration was determined based on a color difference ΔE (JIS K5600-4-6). The lower the value, the smaller the discoloration.

### (Abrasion resistance)

The test pieces were rubbed with No. 0000 steel wool at a load of 500 g back and forth ten times. The surface was visually inspected for scratches.
AA: No scratches
BB: A few scratches
CC: Several scratches
DD: Heavy scratches and damaged transparency

### (Adhesion)

The substrate was any of PC (polycarbonate), PET (polyethylene terephthalate) and ABS (acrylonitrile-butadiene-styrene copolymer). The adhesion was evaluated by a cross cut adhesion test (JIS K5600-5-6).

### (Water resistance)

The test pieces with a PC (polycarbonate) substrate were exposed to 60°C water for 7 hours, and the adhesion was tested. The water resistance was evaluated based on the following criteria.

AA: The adhesion test resulted in 100/100.
BB: The adhesion test resulted in 100/100 to 50/100.
CC: The adhesion test resulted in 50/100 to 30/100.
DD: The adhesion test resulted in 30/100 to 0/100.

### (Impact resistance)

A 500 g spherical weight was dropped from predetermined heights on the test pieces with a PC (polycarbonate) substrate. The impact resistance was evaluated based on the occurrence of cracks.

AA: The coating layer was not cracked by the weight dropped from 40 cm height.
BB: The coating layer was not cracked by the weight dropped from 20 cm height.
CC: The coating layer was cracked by the weight dropped from 20 cm height.

### [Evaluation results]

**[Table 1-1]**

| | Ex. 1 | Ex. 2 | Ex. 3 | Ex. 4 |
|---|---|---|---|---|
| Raw materials of urethane acrylate (U) | H6XDI 2EHOH HEA | H12MDI HEA | H6XDI 2EHOH HEA | H12MDI HEA |
| Acrylate compound (M) | DPHA | DPHA | DPHA | DPHA |
| Acrylate group content in (M) (mmol/g) | 10.4 | 10.4 | 10.4 | 10.4 |
| Aromatic ring in (M) | None | None | None | None |
| Number of acrylate groups | 6 | 6 | 6 | 6 |
| (U)/(M) weight ratio | 30/70 | 30/70 | 50/50 | 50/50 |
| Adhesion (PC) | 100/100 | 100/100 | 100/100 | 100/100 |
| Adhesion (PET) | 100/100 | 100/100 | 100/100 | 100/100 |
| Adhesion (ABS) | 100/100 | 100/100 | 100/100 | 100/100 |
| Heat discoloration resistance (ΔE) | 0.5 | 0.3 | 0.3 | 0.2 |
| Abrasion resistance | BB | AA | BB | BB |
| Water resistance | BB | BB | BB | BB |
| Impact resistance | BB | BB | BB | BB |

**[Table 1-2]**

| (Continued from Table 1-1) | | | | |
|---|---|---|---|---|
| | Ex. 5 | Ex. 6 | Ex. 7 | Ex. 8 |
| Raw materials of urethane acrylate (U) | H6XDI 2EHOH HEA | H12MDI HEA | H6XDI 2EHOH HEA | H6XDI 2EHOH HEA |
| Acrylate compound (M) | DPHA | DPHA | DTPTA | PETA |
| Acrylate group content in (M) (mmol/g) | 10.4 | 10.4 | 8.8 | 10.1 |
| Aromatic ring in (M) | None | None | None | None |
| Number of acrylate groups | 6 | 6 | 4 | 3 |
| (U)/(M) weight ratio | 60/40 | 60/40 | 30/70 | 30/70 |
| Adhesion (PC) | 100/100 | 100/100 | 100/100 | 100/100 |
| Adhesion (PET) | 100/100 | 100/100 | 100/100 | 100/100 |
| Adhesion (ABS) | 100/100 | 100/100 | 100/100 | 100/100 |
| Heat discoloration resistance (ΔE) | 0.2 | 0.2 | 0.5 | 0.5 |
| Abrasion resistance | CC | CC | CC | CC |
| Water resistance | BB | BB | BB | BB |
| Impact resistance | BB | BB | BB | BB |

**[Table 1-3]**

| (Continued from Table 1-2) | | | | |
|---|---|---|---|---|
| | Ex. 9 | Ex. 10 | Ex. 11 | Ex. 12 |
| Raw materials of urethane acrylate (U) | H6XDI | H6XDI | H6XDI | H6XDI |
| | PCD | PTG | PCD | PCD |
| | HEA | HEA | HEA | HEA |
| Acrylate compound (M) | TCDA | TCDA | TCDA | TCDA |
| Acrylate group content in (M) (mmol/g) Aromatic ring in (M) Number of acrylate groups | 6.6 | 6.6 | 6.6 | 6.6 |
| | None | None | None | None |
| | 2 | 2 | 2 | 2 |
| (U)/(M) weight ratio | 30/70 | 30/70 | 50/50 | 60/40 |
| Adhesion (PC) | 100/100 | 100/100 | 100/100 | 100/100 |
| Adhesion (PET) | 100/100 | 100/100 | 100/100 | 100/100 |
| Adhesion (ABS) | 100/100 | 100/100 | 100/100 | 100/100 |
| Heat discoloration resistance (ΔE) | 0.1 | 0.2 | 0.1 | 0.2 |
| Abrasion resistance | AA | AA | BB | BB |
| Water resistance | AA | BB | BB | BB |
| Impact resistance | AA | AA | AA | AA |

**[Table 1-4]**

| (Continued from Table 1-3) | | | | |
|---|---|---|---|---|
| | Comp. Ex. 1 | Comp. Ex. 2 | Comp. Ex. 3 | Comp. Ex. 4 |
| Raw materials of urethane acrylate (U) | IPDI TCDM HPA | TMXDI PCL HEA | None | H12MDI HEA |
| Acrylate compound (M) | ACMO | DCPA | DPHA | None |
| Acrylate group content in (M) (mmol/g) Aromatic ring in (M) Number of acrylate groups | 7.1 | 4.5 | 10.4 | |
| | None | None | None | - |
| | 1 | 1 | 6 | |
| (U)/(M) weight ratio | 60/40 | 60/40 | 0/100 | 100/0 |
| Adhesion (PC) | 80/100 | 100/100 | Cracks | 100/100 |
| Adhesion (PET) | 0/100 | 50/100 | Cracks | 100/100 |
| Adhesion (ABS) | 0/100 | 100/100 | Cracks | 100/100 |
| Heat discoloration resistance (ΔE) | 2.0 | 2.5 | Evaluation impossible | 0.2 |
| Abrasion resistance | DD | DD | Evaluation impossible | DD |
| Water resistance | DD | BB | Evaluation impossible | DD |
| Impact resistance | BB | BB | Evaluation impossible | CC |

**[Table 1-5]**

| (Continued from Table 1-4) | | | |
|---|---|---|---|
| | Comp. Ex. 5 | Comp. Ex. 6 | Comp. Ex. 7 |
| Raw materials of urethane acrylate (U) | IPDI | H6XDI | IPDI |
| | TCDM | 2EHOH | PCL |
| | HPA | HEA | HEA |
| Acrylate compound (M) | DPHA | BP4EA | M315 |
| Acrylate group content in (M) (mmol/g) | 10.4 | 3.9 | 7.1 |
| (M) Aromatic ring in | None | Present | None (Containing nitrogen) |
| Number of acrylate groups | 6 | 2 | 3 |
| (U)/(M) weight ratio | 30/70 | 30/70 | 60/40 |
| Adhesion (PC) | 80/100 | 100/100 | 70/100 |
| Adhesion (PET) | 0/100 | 100/100 | 0/100 |
| Adhesion (ABS) | 0/100 | 100/100 | 20/100 |
| Heat discoloration resistance (ΔE) | 2.0 | 2.4 | 4.2 |
| Abrasion resistance | BB | DD | CC |
| Water resistance | DD | CC | DD |
| Impact resistance | CC | BB | CC |

H6XDI: hydrogenated xylylene diisocyanate
H12MDI: hydrogenated methylenebisphenylene diisocyanate
IPDI: isophorone diisocyanate
TMXDI: tetramethylxylylene diisocyanate
2EHOH: 2-ethyl hexanol
PTG: polytetramethylene polyol (PTG 1000 manufactured by HODOGAYA CHEMICAL CO., LTD.)
PCD: polycarbonate polyol based on 1,6-hexanediol (ETERNACOLL UH-100 manufactured by UBE INDUSTRIES, INC.)
TCDM: tricyclodecane dimethanol
PCL: polycaprolactone diol
HEA: 2-hydroxyethyl acrylate
HPA: 2-hydroxypropyl acrylate
DPHA: dipentaerythritol hexaacrylate
DTPTA: ditrimethylolpropane tetraacrylate
PETA: pentaerythritol triacrylate
ACMO: acryloylmorpholine
DCPA: dicyclopentanyl methacrylate
BP4EA: bisphenol A-EO-modified diacrylate (ARONIX M210 manufactured by TOAGOSEI CO., LTD.)
M315: tris-acryloyloxyethyl isocyanurate (ARONIX M315 manufactured by TOAGOSEI CO., LTD.)
TCDA: tricyclodecanedimethanol diacrylate

### INDUSTRIAL APPLICABILITY

The photocurable coating materials of the invention are curable with UV lights, radiations, electron beams and the like and are excellent in heat discoloration resistance, adhesion to substrates, abrasion resistance, water resistance and impact resistance, exhibiting excellent performance as hard coating materials for plastics.

## Claims

1. A photocurable coating material comprising 5 to 95 parts by weight of a urethane acrylate (U), 5 to 95 parts by weight of an acrylate compound (M) and, based on 100 parts by weight of the total of (U) and (M), 0.1 to 15 parts by weight of a photoinitiator (C), the urethane acrylate (U) at least comprising one or more diisocyanates (a) selected from the group consisting of hydrogenated xylylene diisocyanate and hydrogenated methylenebisphenylene diisocyanate and a compound (b) containing a hydroxyl group and a (meth) acrylate group, the acrylate compound (M) having two or more acrylate groups in the molecule, an acrylate group content of 5 to 12 mmol/g and no aromatic ring structure.

2. The photocurable coating material according to claim 1, wherein the urethane acrylate (U) further comprises either a polytetramethylene polyol or a polycarbonate polyol, or both a polytetramethylene polyol and a polycarbonate polyol.

3. A plastic shaped article coated with the photocurable coating material of claim 1.
